# FASCICULE DE BREVET EUROPEEN

(11) **EP 3 456 601 B1**
(45) Date de publication et mention de la délivrance du brevet: **13.05.2020**
(21) Numéro de dépôt: 18194681.5
(22) Date de dépôt: 14.09.2018
(51) Int. Cl.: B61D 15/02

(54) **SYSTÈME DE MANUTENTION D'ÉLÉMENT DE CONSTRUCTION LONGITUDINAL, VÉHICULE DE MANUTENTION ÉQUIPÉ D'UN TEL SYSTÈME**
FÖRDERSYSTEM EINES LÄNGLICHEN BAUELEMENTS, FÖRDERFAHRZEUG, DAS MIT EINEM SOLCHEN SYSTEM AUSGESTATTET IST
SYSTEM FOR HANDLING OF LONGITUDINAL CONSTRUCTION ELEMENT, HANDLING VEHICLE EQUIPPED WITH SUCH A SYSTEM

(30) Priorité: 15.09.2017 FR 1770970
(43) Date de publication de la demande: 20.03.2019
(73) Titulaire: Novium, 71230 Saint-Vallier (FR)
(72) Inventeur: CHATELET, David, 71230 Saint Vallier (FR); MAES, Thomas, 71410 Sanvignes les Mines (FR)
(74) Mandataire: Cabinet Chaillot

(56) Documents cités:
- EP-A1- 1 386 816
- WO-A1-95/15878
- WO-A1-2011/036642
- DE-A1- 19 511 539
- DE-U1- 29 509 349
- DE-U1-202005 010 848
- FR-A1- 2 673 586
- FR-A1- 3 019 792

## Description

La présente invention concerne le domaine de la manutention d'éléments de construction longitudinaux, tels que des poutres et des poteaux, et porte en particulier sur un système de manutention de tels éléments et sur un véhicule de manutention équipé d'un tel système.

Il existe des besoins pour des systèmes de manutention permettant de déplacer dans l'espace des éléments de construction longitudinaux de type poutre ou poteau, entre différentes positions dans lesquelles lesdits éléments ne présentent pas la même orientation.

Par exemple, un tel besoin est rencontré dans le domaine ferroviaire, lorsqu'il s'agit de remplacer les poteaux et poutres portant la ou les caténaires. Dans ce cas, les nouveaux poteaux et poutres doivent être posés, généralement au voisinage des anciens poteaux et poutres, puis les anciens poteaux et poutres sont déposés après que la ou les caténaires ont été reliées aux nouvelles poutres.

On souligne ici que la pose d'une nouvelle poutre et la dépose d'une ancienne poutre se font alors que la ou les caténaires sont encore en place. En effet, le remplacement des poteaux et poutres d'une portion de voie ferrée se fait généralement la nuit, lorsque les trains ne circulent pas, et la voie ferrée doit pouvoir être rendue à la circulation la journée.

A la connaissance de la Société déposante, la seule solution envisagée pour les opérations de pose et de dépose des poteaux et poutres consiste à utiliser une grue classique, à savoir une grue montée sur un véhicule et comprenant une base montée fixe sur le véhicule, une flèche télescopique reliée à la base et orientable dans l'espace, et des moyens de manutention d'un poteau ou d'une poutre qui consistent en une élingue dont une extrémité présente des moyens d'accrochage au poteau ou à la poutre et dont l'autre extrémité est accrochée à un appareil de levage, généralement au câble d'un treuil. L'opérateur actionne à distance les différents moyens de commande permettant de déplacer dans l'espace la flèche et d'actionner l'appareil de levage pour faire monter ou faire descendre le poteau ou la poutre. Un appareil de ce genre est connu du document WO 95/15878.

La manutention à l'aide d'une telle grue est très délicate notamment pour les poutres, car elle se fait de nuit, avec les caténaires en place, de sorte que les risques de collision de la poutre avec son environnement sont élevés. Ces risques de collision sont d'autant plus élevés que la commande du déplacement de la flèche est elle-même très délicate, du fait que la poutre manutentionnée est suspendue à une élingue et déplacée simultanément dans les trois directions de l'espace. Le succès de l'opération repose ainsi également sur la compétence de l'opérateur de la grue.

Un autre inconvénient est que la grue doit être de grande capacité, car la poutre est suspendue par le dessus et qu'elle doit être supportée par au moins un poteau tout en étant au-dessus de la ou des caténaires. On comprendra aisément que cela suppose que la grue ait une flèche de longueur importante de façon à pouvoir lever la poutre à la hauteur adéquate, et également éviter un risque de contact entre la flèche et la poutre lorsque l'orientation de cette dernière est modifiée en cours de manutention.

La Société déposante a donc cherché une solution permettant de poser et déposer des poteaux et des poutres, et de manière plus générale de manutentionner des éléments de construction longitudinaux, d'une manière plus sûre et plus rapide.

La présente invention a pour objet un système de manutention d'élément de construction longitudinal, tel qu'une poutre ou un poteau, comprenant une base destinée à être montée sur un véhicule, des moyens de manutention pour manutentionner un élément de construction longitudinal, et des moyens de déplacement pour déplacer dans l'espace les moyens de manutention, les moyens de déplacement étant d'une part reliés à la base et d'autre part reliés aux moyens de manutention, le système de manutention étant caractérisé par le fait que les moyens de déplacement comprennent :
- un ensemble bras télescopique ;
- des moyens de montage reliant à la base une première extrémité de l'ensemble bras télescopique d'une manière permettant de faire pivoter l'ensemble bras télescopique vers le haut ou vers le bas tout en faisant pivoter l'ensemble bras télescopique autour d'un axe vertical, de sorte que l'ensemble bras télescopique est orientable, les moyens de montage étant montés sur la base de façon à être aptes à coulisser le long de la base suivant une direction dite transversale, laquelle direction transversale est, une fois la base montée sur le véhicule, perpendiculaire à la direction de déplacement du véhicule ; et
- des moyens de commande à distance de l'orientation et de l'allongement/rétractation de l'ensemble bras télescopique,
et par le fait que les moyens de manutention comprennent un palonnier muni de moyens de préhension aptes à saisir un élément de construction longitudinal et à le relâcher, le palonnier étant relié à la seconde extrémité de l'ensemble bras télescopique par l'intermédiaire d'un dispositif de liaison autorisant un pivotement du palonnier autour d'un axe vertical et autour d'un axe horizontal orthogonal à la direction longitudinale du palonnier.

On peut mentionner ici que l'utilisation d'un ensemble bras télescopique déplaçable dans l'espace et monté sur une base portée par un wagon est déjà connue, mais dans le contexte d'une plate-forme de travail rendue élévatrice par un tel ensemble bras, comme par exemple dans la demande de brevet allemand DE 195 11 539 A1, la demande internationale PCT WO 2011/036642 A1 et la demande de brevet français FR 2 673 586 A1. Il n'y est pas question de manutentionner des éléments de construction longitudinaux, le fil caténaire de la demande FR 2 673 586 A1 ne pouvant être qualifié d'élément de construction et l'organe en U qui y est décrit ne constituant pas un palonnier au sens de la présente invention, a fortiori n'est pas apte à saisir puis relâcher un élément de construction. Les documents-brevets mentionnés ci-dessus ne décrivent donc pas de systèmes de manutention d'élément de construction longitudinal et n'appartiennent donc pas au domaine technique de la présente invention.

De préférence, le dispositif de liaison comprend un mât vertical relié à l'ensemble bras télescopique de façon à pouvoir tourner autour d'un axe vertical, et le long duquel mât vertical le palonnier est déplaçable en translation.

Avantageusement, le dispositif de liaison peut comprendre en outre un bec comportant une première partie qui est reliée au mât vertical de façon à être déplaçable en translation le long de ce dernier, et une seconde partie qui s'étend à partir de la première partie dans une direction d'extension qui est perpendiculaire à cette dernière, le palonnier étant relié à la seconde partie du bec par une liaison pivot dont l'axe de pivotement est parallèle à ladite direction d'extension.

De préférence, les moyens de préhension sont disposés de façon à s'étendre au moins en partie au-dessus du palonnier, de telle sorte que l'élément de construction longitudinal qu'il s'agit de manutentionner peut être saisi par le dessous et que le palonnier reste au-dessous dudit élément de construction longitudinal pendant la manutention de ce dernier.

Le palonnier peut comprendre au moins une platine de support sur laquelle un élément de construction longitudinal est apte à être posé, de préférence deux platines de support espacées l'une de l'autre dans la direction longitudinale du palonnier.

De préférence, les moyens de préhension comprennent une pince, de préférence deux pinces espacées l'une de l'autre dans la direction longitudinale du palonnier, le cas échéant chacune des deux pinces se situant au voisinage de l'une respective des deux platines de support.

De préférence, la base comprend au moins un rail destiné à être fixé sur un véhicule transversalement à la direction de déplacement du véhicule, de préférence deux rails parallèles.

De préférence, les moyens de montage comprennent une tourelle ayant une première partie fixe en rotation et montée à translation sur la base, et une seconde partie mobile en rotation et à laquelle l'ensemble bras télescopique est relié par une liaison pivot dont l'axe de pivotement est horizontal.

De préférence, les moyens de montage comprennent un berceau correcteur de dévers, disposé entre la base et l'ensemble bras télescopique, le cas échéant disposé entre la base et la tourelle.

Les moyens de montage peuvent comprendre un chariot monté à translation sur la base, le cas échéant coopérant avec le ou les rails que comprennent la base, chariot sur lequel est monté, le cas échéant, la tourelle ou le berceau correcteur de dévers, lorsque ce dernier est présent.

La présente invention a également pour objet un véhicule, de préférence ferroviaire, de manutention d'élément de construction longitudinal, équipé d'un système de manutention d'élément de construction, caractérisé par le fait que le système de manutention est tel que défini ci-dessus, la base étant fixée sur le véhicule.

De préférence, le véhicule de manutention comprend une plateforme longitudinale sur laquelle la base du système de manutention est fixée, dans la partie médiane de la plateforme dans ladite direction longitudinale.

De préférence, le véhicule comprend un wagon plat, dit wagon de manutention, équipé d'un rail sur chaque côté longitudinal, le wagon de manutention étant destiné à être accouplé, par un pont inter-wagon, à un autre wagon plat, dit de stockage, également équipé d'un rail sur chaque côté longitudinal.

Avantageusement, le véhicule de manutention comprend ledit wagon de stockage et, de préférence, au moins un autre wagon de stockage équipé d'un rail sur chaque côté longitudinal, les wagons de stockage étant accouplés les uns à la suite des autres par un pont inter-wagon entre chaque wagon de stockage adjacent, le ou chaque wagon de stockage étant équipé d'au moins un dispositif de rangement et d'arrimage d'éléments de construction longitudinaux, le véhicule de manutention comprenant en outre un dispositif de manutention monté à translation sur lesdits rails et apte à saisir un élément de construction longitudinal stocké sur un wagon de stockage et à venir le placer dans une position où ledit élément de construction longitudinal peut être saisi par les moyens de préhension du système de manutention.

Dans le cas où les moyens de préhension sont disposés de façon à s'étendre au moins en partie au-dessus du palonnier, avec de préférence présence d'au moins une platine de support, le dispositif de manutention comprend avantageusement un portique monté à translation le long des rails des wagons de stockage et du wagon de manutention, et des moyens de manutention portés par le portique et aptes à saisir et relâcher de manière sélective un élément de construction longitudinal et à le déplacer au moins verticalement, de préférence à la fois horizontalement et verticalement.

Ainsi, les moyens de manutention du dispositif de manutention permettent :
- de saisir un élément de construction longitudinal stocké sur un wagon de stockage, puis
- de lever ledit élément de construction longitudinal, puis
- de le déplacer, par déplacement du portique, jusqu'à une position dite de chargement, dans laquelle ledit élément de construction longitudinal se situe au-dessus du palonnier du système de manutention qui se trouve dans une position dite d'attente, dans laquelle l'ensemble bras télescopique s'étend le long du wagon de manutention et ledit palonnier est à l'horizontale avec sa direction longitudinale parallèle à la direction longitudinale du véhicule de manutention, puis
- d'abaisser ledit élément de construction longitudinal pour qu'il repose sur la ou les platines de support, instant auquel les moyens de manutention relâchent ledit élément de construction longitudinal.

De préférence, les moyens de manutention du dispositif de manutention comprennent deux glissières solidaires du portique et transversales à la direction longitudinale du véhicule, deux chariots chacun montés à translation sur l'une respective des glissières, des moyens de préhension reliés aux chariots par des moyens aptes à faire monter et descendre les moyens de préhension, tels que des câbles, les moyens de préhension étant aptes à, de manière sélective, saisir par le dessus un élément de construction longitudinal et le relâcher.

De préférence, les moyens de préhension du dispositif de manutention comprennent, pour chaque chariot, une pince, de préférence les deux glissières, et donc les chariots et lesdites pinces, étant espacées l'une de l'autre dans la direction longitudinale du portique.

Pour mieux illustrer l'objet de la présente invention, on va en décrire ci-après, à titre indicatif et non limitatif, un mode de réalisation préféré avec référence au dessin annexé.

Sur ce dessin :
- les Figures 1 et 2 sont des vues en perspective d'un système de manutention selon un mode de réalisation préféré de la présente invention ;
- la Figure 3 est une vue de côté d'une partie d'un véhicule ferroviaire de manutention selon un mode de réalisation préféré de la présente invention, le véhicule étant une rame comprenant un wagon porte-nacelle, un wagon de manutention et plusieurs wagons de stockage, dont seulement deux sont visibles ;
- la Figure 4 est une vue en perspective du wagon de manutention ;
- la Figure 5 est une vue en perspective de deux wagons de stockage ;
- les Figures 6 et 7 sont des vues en perspective du dispositif de manutention ;
- les Figures 8 à 13 sont des vues en perspective à différents temps lors de la pose d'un poteau ;
- les Figures 14A et 14B sont des vues de détail illustrant le déplacement final du poteau ;
- les Figures 15 à 19 sont des vues en perspective à différent temps lors de la pose d'une poutre sur deux poteaux ; et
- la Figure 20 est une vue en perspective illustrant la pose d'une demi-poutre sur un poteau.

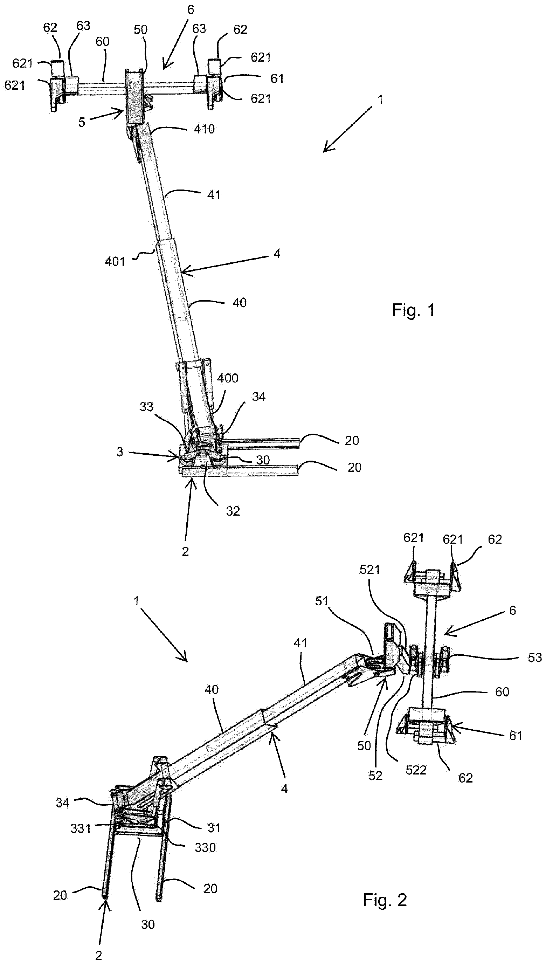

Si l'on se réfère tout d'abord aux Figures 1 et 2, on peut voir qu'un système de manutention 1 selon un mode de réalisation de la présente invention comprend une base 2, des moyens de montage 3, un ensemble bras 4, un dispositif de liaison 5 et des moyens de manutention 6.

La base 2 est destinée à être fixée sur un wagon de manutention, comme cela sera illustré ci-après, et est formée ici par deux rails 20 parallèles l'un à l'autre et destinés à être fixés sur le wagon de manutention dans une position telle qu'ils sont transversales par rapport à la direction longitudinale du wagon de manutention, autrement dit à la direction de déplacement dudit wagon.

Les rails 20 peuvent par exemple être à section transversale en U, avec l'ouverture d'un rail 20 dirigée vers l'ouverture de l'autre rail 20.

Les moyens de montage 3 comprennent un chariot 30 monté à translation sur les rails 20 par des organes de roulement ou de coulissement, comme par exemple des galets 31 roulant dans les rails 20. Le chariot 30 pourra par exemple être motorisé par un moteur bidirectionnel, le moteur entraînant au moins l'un des galets 31. Le chariot 30 est ainsi déplaçable dans les deux sens le long de la base 20.

Le chariot 30 porte ou constitue un berceau de correction de dévers 32 dans lequel est montée une tourelle 33.

En particulier, la tourelle 33 comprend une première partie, à savoir la couronne d'orientation 330, qui est reliée au berceau de correction de dévers 32 et une seconde partie, à savoir la partie mobile 331, reliée à la couronne d'orientation 330 de façon à pouvoir tourner autour d'un axe perpendiculaire au plan de cette dernière. Le berceau de correction de dévers 32, bien connu en soi, sert à compenser un éventuel dévers que pourrait présenter le wagon de manutention, pour que la couronne d'orientation 330 soit horizontale, et donc que la partie mobile 331 de la tourelle 33 puisse tourner autour d'un axe vertical.

La partie mobile 331 porte l'ensemble bras télescopique 4 par une liaison pivot 34 dont l'axe de pivotement est parallèle au plan de la couronne d'orientation 330, et qui est donc horizontal grâce au berceau de correction de dévers 32. De plus, l'axe de pivotement de la liaison pivot 34 est orientable à 360° dans le plan horizontal, par rotation de la partie mobile 331.

Ainsi, l'ensemble bras télescopique 4 est orientable dans les trois directions de l'espace par rotation de la tourelle 33 autour d'un axe vertical et par pivotement de l'ensemble bras télescopique 4 autour de la liaison pivot 34. Bien entendu, la tourelle 33 peut tourner dans le sens horaire et dans le sens anti-horaire et l'ensemble bras télescopique 4 peut pivoter aussi bien vers le haut que vers le bas.

L'ensemble bras télescopique 4 comprend un bras principal 40 creux dont l'extrémité inférieure 400 est reliée à la liaison pivot 34, et un bras télescopique 41 s'étendant hors de l'extrémité supérieure 401 du bras principal 40. De manière classique, le bras télescopique 41 est reçu à translation dans le bras principal 40 et peut être déplacé dans une direction d'extension, dans laquelle il sort du bras principal 40, et dans une direction de rétraction, dans laquelle il est rétracté dans le bras principal 40.

Le bras télescopique 41 est muni, à son extrémité supérieure 410, du dispositif de liaison 5 par laquelle il porte les moyens de manutention 6.

Le dispositif de liaison 5 comprend un mât 50 vertical relié à ladite extrémité supérieure 410 par une articulation 51 autorisant le mât 50 à tourner autour d'un axe de pivotement qui reste vertical indépendamment de l'inclinaison de l'ensemble bras télescopique 4.

Le dispositif de liaison 5 comprend en outre un bec 52 comprenant une première partie 521 reliée à translation au mât 50 de façon à pouvoir monter et descendre le long de ce dernier, et une seconde partie 522 s'étendant à partir de la première partie 521 dans une direction d'extension qui est opposée à celle où se situe le bras télescopique 41. La direction d'extension est orthogonal à la direction longitudinale du mât 50, et donc est horizontale indépendamment de l'inclinaison de l'ensemble bras télescopique 4. La seconde partie 522 du bec 52 est reliée aux moyens de manutention 6 par une liaison pivot 53 dont l'axe de pivotement est orthogonal à la direction d'extension de la seconde partie 522. En d'autres termes, l'axe de pivotement de la liaison pivot 53 reste horizontal indépendamment de l'inclinaison de l'ensemble bras télescopique 4 et est orientable dans le plan horizontal par rotation du mât 50 autour de l'axe de pivotement vertical permis par l'articulation 51.

En particulier, les moyens de manutention 6 comprennent un palonnier 60, qui s'étend suivant une direction longitudinal, et c'est le palonnier 60 qui est relié au bec 52 par la liaison pivot 53. Cette dernière se situe au niveau du centre du palonnier 60, de sorte que ce dernier peut être incliné d'un côté ou de l'autre par rotation autour de l'axe de pivotement de la liaison pivot 53. Selon la présente invention, le palonnier 60 est inclinable selon un angle d'inclinaison compris dans une plage allant de 0° à au moins 90° par rapport à l'horizontale. En d'autres termes, le palonnier 60 peut être placé à l'horizontale, à la verticale, ou dans n'importe quelle position intermédiaire entre les deux.

Les moyens de manutention comprennent également des moyens de préhension 61 portés par le palonnier 60. Dans le mode de réalisation illustré, les moyens de préhension 61 comprennent une paire de pinces 62, chacune située dans une région d'extrémité respective du palonnier 60. Les pinces 62 comprennent deux mâchoires 621 montées mobiles en translation par rapport au palonnier 60, dans la direction transversale du palonnier 60, de façon à pouvoir être rapprochées l'une de l'autre pour saisir un poteau ou une poutre et être écartées l'une de l'autre pour relâcher le poteau ou la poutre.

On souligne ici que les parties des mâchoires 621 qui viendront serrer un poteau ou une poutre se situent au-dessus du palonnier 60, de sorte que le poteau ou la poutre sera tenue par les moyens de préhension 61 en étant supporté par le dessous par le palonnier 60. A cet effet, le palonnier 60 présente deux platines de support 63 aptes à supporter un poteau ou une poutre qui reposerait sur celles-ci. Chaque platine de support 63 est solidaire, par tout moyen approprié, du palonnier 60 au voisinage d'une pince 62 respective.

Les déplacements des différentes parties mobiles que sont le chariot 30 (déplacement en translation le long de la base 20), la partie mobile 331 de la tourelle 33 (rotation autour d'un axe vertical par rapport à la couronne d'orientation 330), le bras principal 40 (déplacement en inclinaison par rapport à la tourelle 33), le bras télescopique 41 (extension et rétraction), le mât 50 (rotation autour d'un axe de pivotement vertical), le bec 52 (translation verticale le long du mât 50) et le palonnier 60 (rotation autour d'un axe de pivotement horizontal), sont obtenus par des actionneurs appropriés, bien connus en soi, comme par exemple, des moteurs, des vérins, etc. Ces actionneurs sont commandables à distance par tout moyen approprié de commande à distance, également comme cela est bien connu en soi, comme par exemple par radio émetteur/récepteur. L'opérateur disposera donc d'une télécommande lui permettant de commander les déplacements des différentes parties.

Avantageusement, on pourra prévoir un capteur angulaire pour la tourelle 33 et des capteurs d'inclinaison pour l'ensemble bras télescopique 4 et le palonnier 60, et les différents actionneurs pourront être asservis, à l'aide des sorties de ces capteurs, de telle sorte que dans certaines phases de la manutention le palonnier 60 reste horizontal indépendamment de l'inclinaison de l'ensemble bras télescopique 4, ou que la direction du palonnier 60 reste globalement parallèle à la direction longitudinale du véhicule indépendamment de l'orientation angulaire de la tourelle 33, pour des raisons qui ressortiront davantage ci-après.

On souligne ici que la présente invention n'est pas limitée à une structure particulière pour la réalisation des différentes liaisons entre les parties mobiles, notamment les liaisons autorisant un pivotement ou une rotation, et l'on pourra employer toute structure appropriée, donc un grand nombre est bien connu de l'homme du métier.

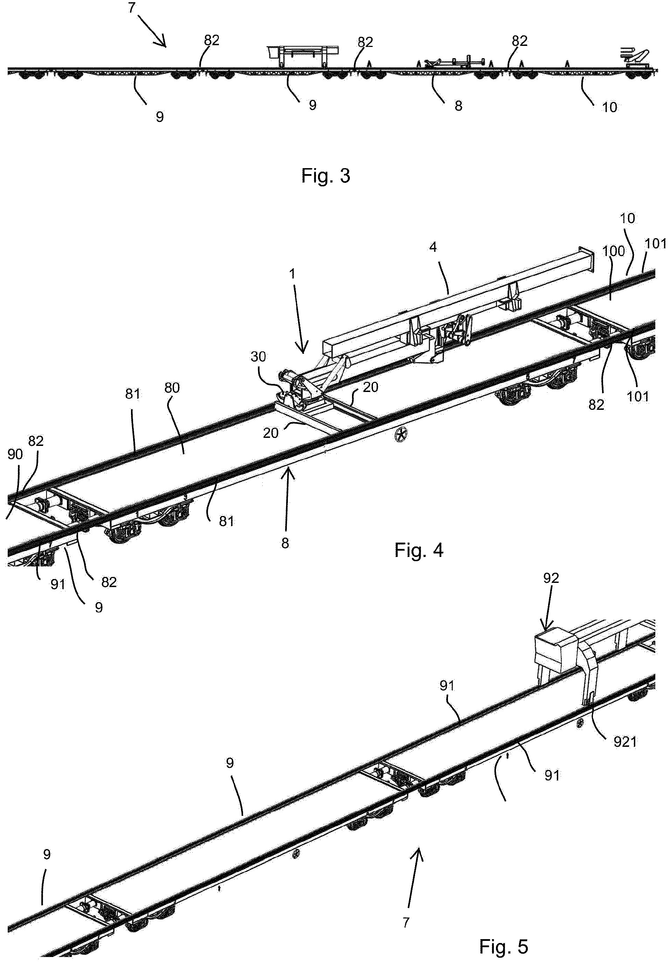

Si l'on se réfère maintenant à la Figure 3, on peut voir que l'on y a représenté une partie d'un véhicule ferroviaire de manutention 7, qui est ici une rame comprenant un wagon de manutention 8, plusieurs wagons de stockage 9 et un wagon porte-nacelle 10. Le véhicule 7 est destiné à la pose de nouveaux poteaux et poutres de support de caténaire(s) et à la dépose des anciens poteaux et poutres.

Si l'on se réfère tout d'abord à la Figure 4, on peut voir que le wagon de manutention 8 est un wagon plat classique, comprenant notamment une plateforme 80. Le système de manutention 1 est monté sur la plateforme 80. En particulier, les rails 20 sont fixés par tout moyen approprié sur la plateforme 80, transversalement à la direction longitudinale du wagon de manutention 8, dans la partie médiane de ce dernier.

Sur la Figure 4, le système de manutention 1 est en position d'attente, dans laquelle le chariot 30 se situe à une extrémité de la base 20, l'ensemble bras télescopique 4 est sensiblement horizontal et parallèle à la direction longitudinale du wagon de manutention 8, et le palonnier 60 est orienté pour être parallèle à l'ensemble bras télescopique 4, à la même hauteur que ce dernier et sensiblement sur l'axe longitudinal médian du wagon de manutention 8, avec les pinces 62 en position écartée.

Le wagon de manutention 8 est également équipé de deux rails 81, chacun fixé le long d'un côté longitudinal respectif de la plateforme 80 et s'étend d'une extrémité à l'autre de celle-ci.

Le wagon de manutention 8 est relié d'un côté au wagon porte-nacelle 10 et de l'autre côté à un wagon de stockage 9, qui sont tous les deux également des wagons plats dont la plateforme 90, 100 est équipée de deux rails 91, 101, par des ponts inter-wagons 82 qui permettent d'obtenir une continuité entre les différents rails, comme on peut le voir sur les Figures 4 et 5. Les wagons de stockage 9 servent au stockage des nouveaux poteaux et poutres ainsi que des anciens poteaux et poutres, et sont à cet effet équipés de dispositifs de rangement et d'arrimage bien connus en soi.

Si l'on se réfère maintenant aux Figures 5 à 7, on peut voir qu'un dispositif de manutention 92 est monté à translation sur lesdits rails, de sorte qu'il peut se déplacer le long du véhicule 7 en passant d'un wagon de stockage 9 à un autre, jusqu'au wagon de manutention 8.

Le dispositif de manutention 92 comprend un portique 920 motorisé s'étendant au-dessus des plateformes des wagons et des dispositifs de rangement et d'arrimage des poteaux et poutres. Le portique 920 est monté à translation sur les rails 81, 91 par des organes de roulement, comme par exemple des roues 921, avec une roue 921 à chaque extrémité inférieure de deux arches 922 reliées par un longeron central 923.

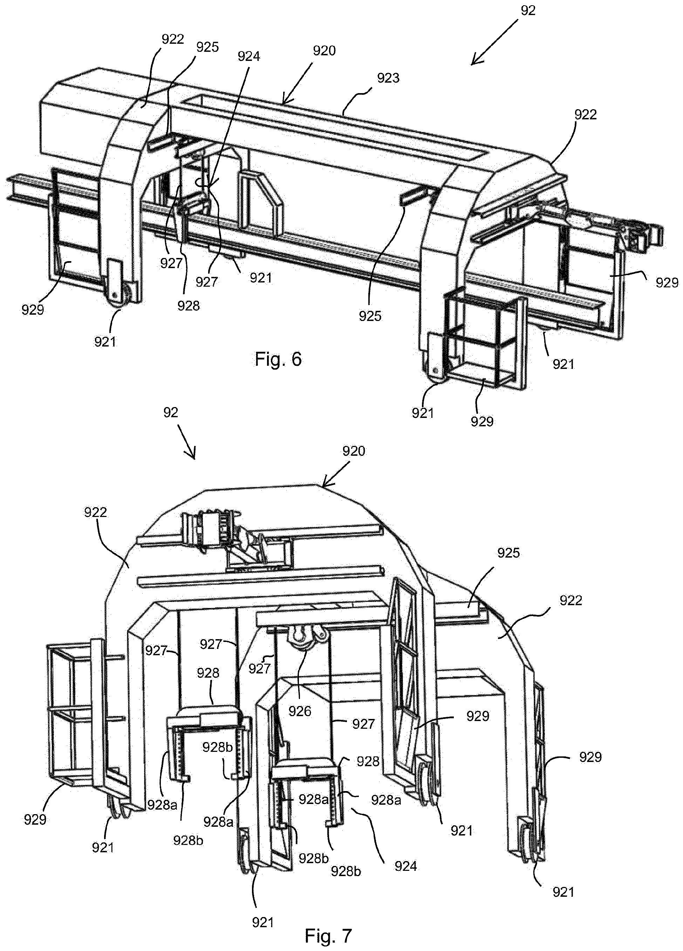

Le dispositif de manutention 92 comporte en outre des moyens de manutention 924 comprenant deux glissières 925 transversales à la direction longitudinale du portique 920 et le long de chacune desquelles est monté à translation un chariot 926 à partir duquel s'étend vers le bas deux câbles 927 qui sont montés sur poulie(s) de façon à pouvoir monter/descendre et qui sont reliés, au niveau de leurs extrémités inférieures, à des moyens de préhension 928 aptes à saisir un poteau ou une poutre et à le relâcher. Les moyens de préhension 928 sont par exemple, comme illustré sur les Figures 6 et 7, une paire de pinces, de manière analogue au palonnier 60 du système de manutention 1. En particulier, l'ouverture des pinces est dirigée vers le bas, de sorte que les pinces peuvent saisir un poteau ou une poutre par le dessus. De préférence, chaque pince comprend deux mâchoires 928a pouvant être rapprochées l'une de l'autre ou écartées l'une de l'autre, et les extrémités inférieures de chaque mâchoire 928a comprend un retour 928b vers l'intérieur. On comprendra aisément que les pinces seront dimensionnées pour qu'en position ouverte, l'espacement entre les retours 928b soit suffisant pour permettre le passage d'un poteau ou d'une poutre, et qu'en position fermée les mâchoires 928a seront en contact de part et d'autre de la poutre ou du poteau et que ce dernier reposera sur sa face inférieure sur les retours 928b.

Le déplacement du portique 920 le long des rails 81, 91 est obtenue de manière classique par une motorisation, comme cela est bien connu en soi. Des postes de conduite 929 sont aménagés aux quatre coins du portique 920, sur lesquels les opérateurs pourront prendre place pour commander à distance, par exemple par radio commande, le dispositif de manutention 92, notamment les chariots 926, les câbles 927 et les moyens de préhension 928.

On comprendra donc aisément que le dispositif de manutention 92 peut être positionné dans la partie médiane de l'un quelconque des wagons de stockage 9, puis les moyens de préhension 928 sont abaissés pour venir saisir un poteau ou une poutre stocké sur le wagon de stockage 9 en question, puis remonté. Le dispositif de manutention 92 peut ensuite être déplacé jusqu'au wagon de manutention 8 pour charger le système de manutention 1. A cet effet, le dispositif de manutention 92 est déplacé jusqu'à se situer au-dessus du système de manutention 1 qui se situe en position d'attente. Les moyens de préhension 928 du dispositif de manutention 92 peuvent alors être abaissés pour placer sur les platines de support 63 le poteau ou la poutre, qui est alors saisi par les moyens de préhension 61 du système de manutention 1 puis les moyens de préhension 928 du dispositif de manutention 92 relâchent le poteau ou la poutre, sont remontés et le dispositif de manutention 92 est déplacé dans l'autre sens jusqu'à un wagon de stockage 9 pour récupérer un autre poteau ou poutre.

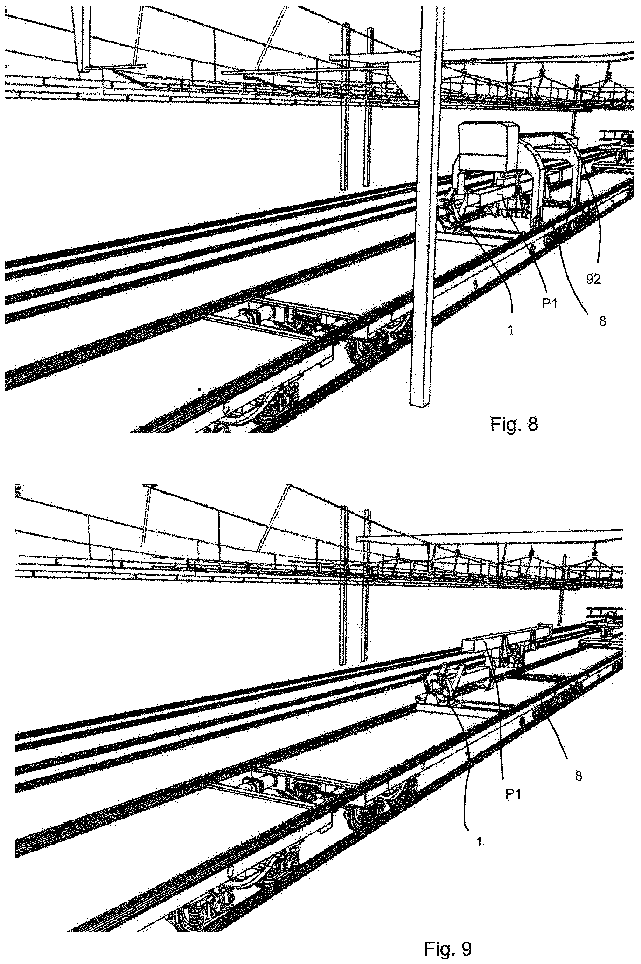

On va maintenant décrire les différentes phases d'utilisation du véhicule de manutention 7 pour poser un nouveau poteau, avec référence aux Figures 8 à 13.

Sur la Figure 8, le dispositif de manutention 92 est en train de charger le système de manutention 1 avec un nouveau poteau P1, de la manière décrite ci-dessus.

Sur la Figure 9, le dispositif de manutention 92 a été déplacé hors du wagon de manutention 8 et le poteau P1 a été déplacé vers le haut, tout en restant horizontal, par déplacement du bec 52, donc du palonnier 60, verticalement le long du mât 50.

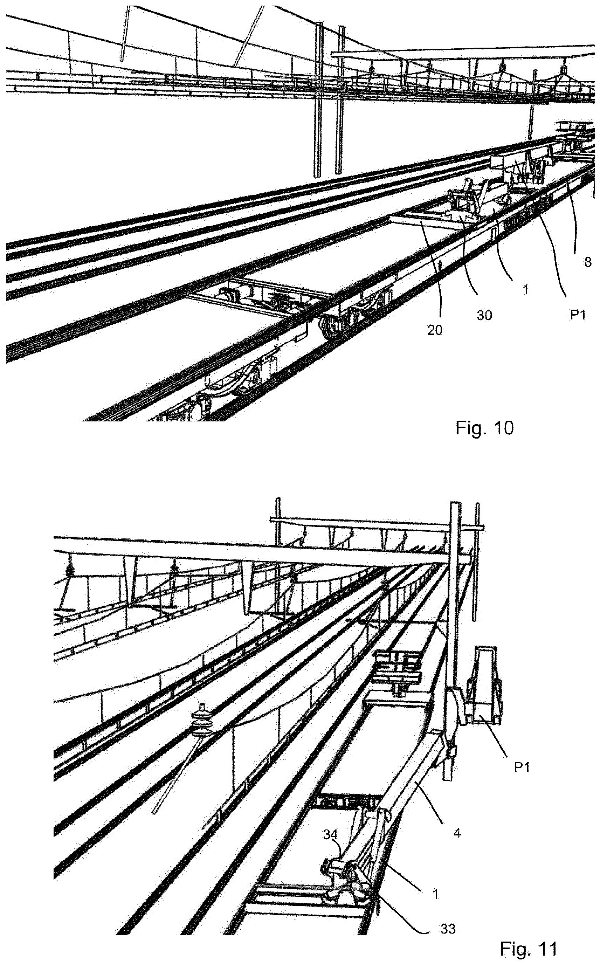

Sur la Figure 10, le chariot 30 a été déplacé le long de la base 20 jusqu'à l'autre extrémité de cette dernière, côté droit si l'on regarde la Figure 10, le palonnier 60, et donc le poteau P1, se trouvant alors en porte-à-faux sur le côté du wagon de manutention 8, côté duquel le poteau P1 doit être installé.

Sur la Figure 11, le poteau P1 est en cours de déplacement vers le haut et vers le côté, toujours en restant horizontal. Ceci est obtenu en faisant simultanément tourner l'ensemble bras télescopique 4 autour d'un axe vertical au niveau de la tourelle 33, pivoter l'ensemble bras télescopique 4 vers le haut autour de l'axe de la liaison pivot 34, et pivoter le mât 50, et donc le palonnier 60, autour de l'axe vertical de l'articulation 51.

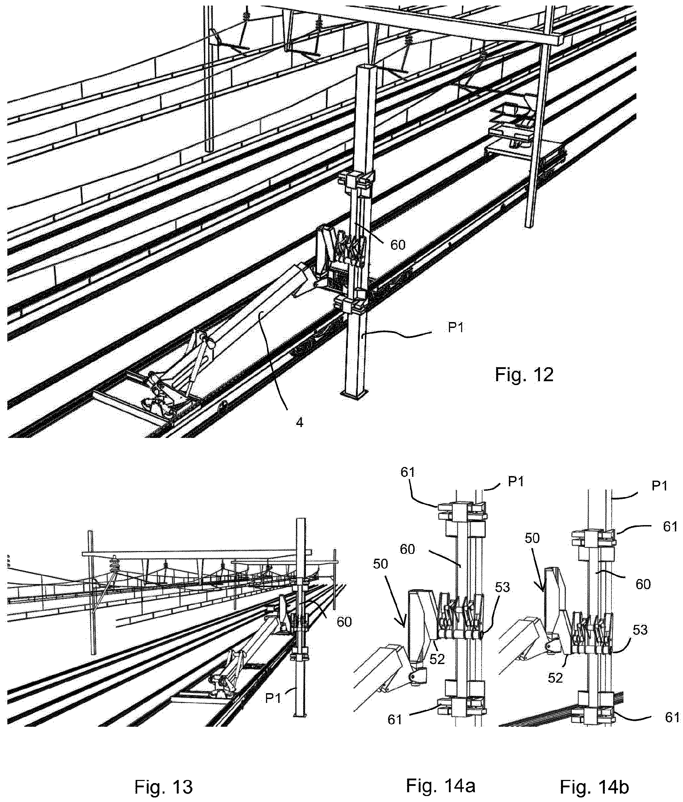

Sur la Figure 12, le poteau P1 a été élevé à une hauteur suffisante, et le palonnier 60 est amené à pivoter autour de l'axe de la liaison pivot 53 pour être orienté verticalement, faisant ainsi passer le poteau P1 de l'horizontale à la verticale. L'extrémité inférieure du poteau P1 est à distance du sol. Cette distance peut être réduite par abaissement de l'ensemble bras télescopique 4.

Sur la Figure 13, le bec 52, et donc le palonnier 60 et le poteau P1, a été descendu le long du mât 50, de façon à mettre en place le poteau P1 sur son socle au sol.

On peut mieux voir ce déplacement final sur les Figures 14A et 14B. Il est avantageux que ce déplacement final soit obtenu par le déplacement du bec 52 le long du mât 50, plutôt que par inclinaison de l'ensemble bras télescopique 4, car cela permet d'offrir un contrôle plus précis de la position du poteau, ce qui est particulièrement utile du fait qu'en générale le poteau P1 porte une platine inférieure qui est à enfiler sur des tiges filetées s'étendant à partir du socle, ce qui requiert un degré de précision plutôt élevé.

Une fois le poteau P1 en position sur son socle, il est relâché par les moyens de préhension 61 et le système de manutention 1 est ramené dans sa position d'attente, comme illustré sur la Figure 4.

On comprendra que l'on procède de la même manière pour mettre en place un nouveau poteau de l'autre côté des voies. On constate donc ici l'intérêt que l'ensemble bras télescopique 4 soit déplaçable en translation transversalement à la direction longitudinale du wagon de manutention 8, car cela permet de mettre le poteau en porte-à-faux d'un côté ou de l'autre dudit wagon, en fonction du côté où le poteau doit être posé.

On va maintenant décrire les différentes phases d'utilisation pour poser une nouvelle poutre entre deux nouveaux poteaux que l'on aura posés au préalable de la manière décrite ci-dessus.

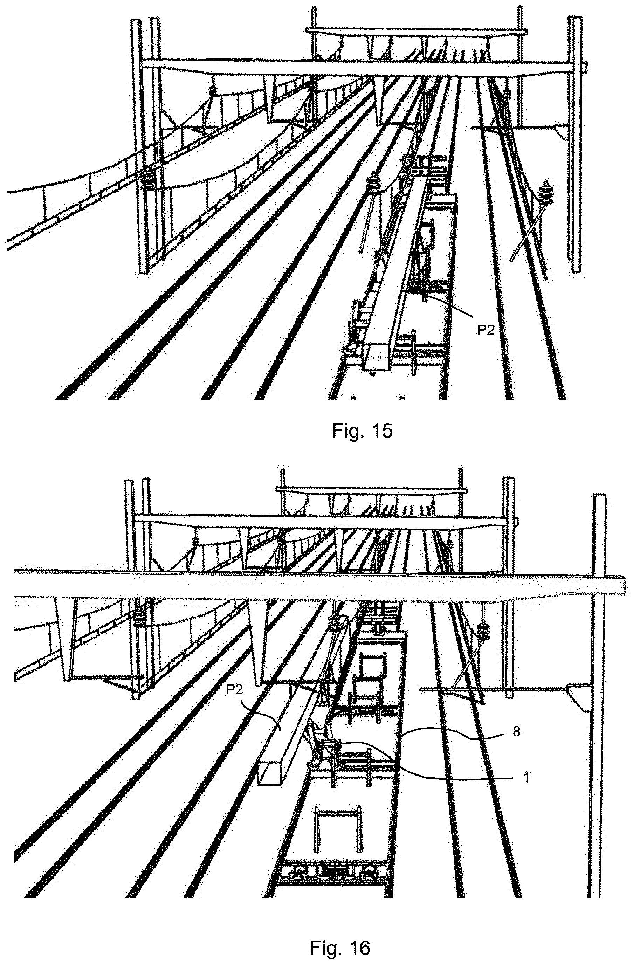

Sur la Figure 15, une nouvelle poutre P2 a été chargée sur le système de manutention 1 par le dispositif de manutention 92 de la même manière que celle décrite ci-dessus pour le poteau P1.

Sur la Figure 16, la poutre P2 a été déplacée vers le haut, tout en restant horizontale, par déplacement du bec 52, et donc du palonnier 60, verticalement le long du mât 50. La poutre P2 a également été déplacée pour être en porte-à-faux sur le côté gauche du wagon de manutention 8, lorsqu'on observe la Figure 16, tout en restant parallèle à la direction longitudinale du wagon de manutention 8. Ceci est obtenue en faisant simultanément tourner l'ensemble bras télescopique 4 autour de l'axe vertical au niveau de la tourelle 33 et pivoter le mât 50, et donc le palonnier 60, autour de l'axe vertical de l'articulation 51. La poutre P2 se situe alors au-dessus de l'ensemble bras télescopique 4, sans pour autant qu'il y ait d'interférence entre les deux. Ces déplacements sont commandés de telle sorte que le palonnier 60 se situe entre les deux voies, donc à l'aplomb de l'espace entre les deux caténaires correspondantes.

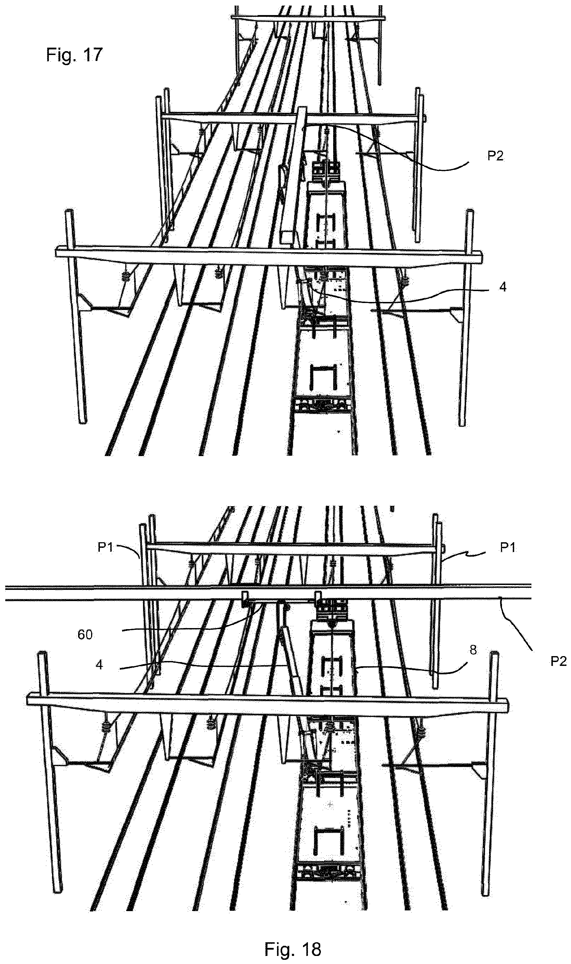

Sur la Figure 17, la poutre P2 a été déplacée vers le haut, jusqu'à se situer au-dessus des caténaires, par pivotement de l'ensemble bras télescopique 4 vers le haut. La poutre P2 reste horizontale grâce au pivotement simultané du palonnier 60 autour de l'axe de la liaison pivot 53.

On souligne ici que le passage entre les deux caténaires, qui est une phase très délicate lorsque l'on utilise une grue comme dans l'état antérieur de la technique, est ici particulièrement aisé et sûr, car il est obtenu par un mouvement simple de l'ensemble bras télescopique 4 qu'il est aisé de maîtriser. De plus, la poutre P2 étant supportée par le dessous, la hauteur à laquelle doit être étendue l'ensemble bras télescopique 4 est très inférieure à celle à laquelle doit être étendue la flèche d'une grue classique.

Sur la Figure 18, la poutre P2 a été orientée correctement transversale aux voies, par simple pivotement du mât 50, et donc du palonnier 60, autour de l'axe vertical de l'articulation 51.

Le véhicule de manutention 8 est ensuite décalé pour que la poutre P2 se situe au niveau des poteaux P1 sur laquelle elle doit être posée.

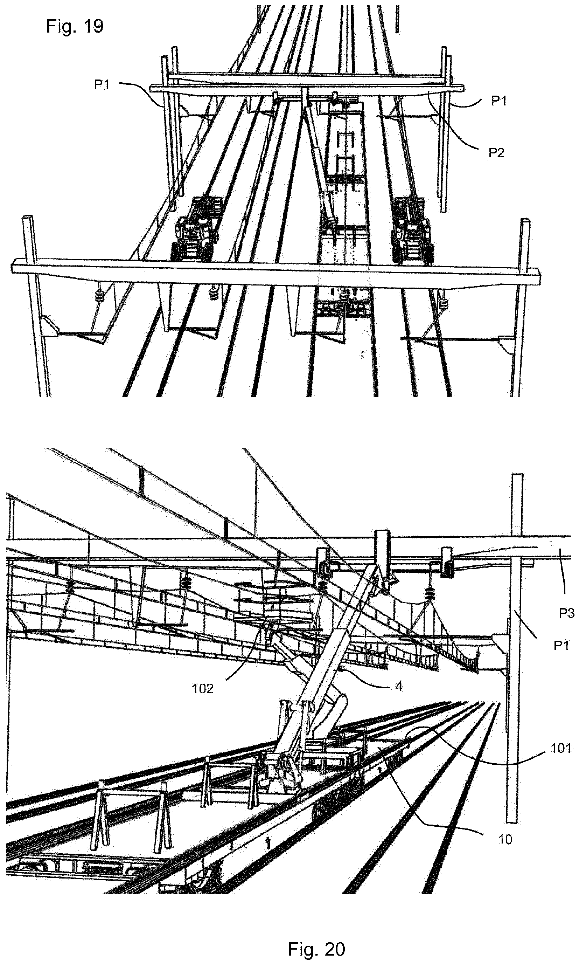

Sur la Figure 19, la poutre P2 est abaissée pour venir reposer sur les poteaux P1, par déplacement du bec 52, et donc du palonnier 60, le long du mât 60, de façon à venir ajuster précisément la hauteur de la poutre P2. Comme pour la descente finale des poteaux P1, le déplacement final de la poutre P2 grâce au déplacement du bec 52 permet un contrôle bien plus précis de la hauteur de la poutre P2.

Une fois la poutre P2 en place, la nacelle 102, qui est montée à translation sur les rails 101 du wagon porte-nacelle 10, est déplacée jusqu'au wagon de manutention 8 pour être positionnée au voisinage de la liaison entre la poutre P2 et le poteau P1 pour permettre aux opérateurs de fixer la poutre P2 au poteau P1.

On constate donc que le système de manutention 1 selon la présente invention permet de poser de manière rapide, aisée et sûre, de nouveaux poteaux et poutres pour le support de caténaires. Le système de manutention 1 présente également l'avantage d'être particulièrement compact.

Dans l'exemple illustré sur les Figures 15 à 19, la poutre P2 a une longueur de 30 mètres. Le système de manutention 1 peut bien entendu être utilisé pour poser des demi-poutres, comme on peut le voir sur la Figure 20. Le principe reste identique à celui décrit ci-dessus, à la différence que la demi-poutre P3 est élevée côté extérieur de la voie et de la caténaire, et non côté intérieur comme pour une poutre P2.

On comprendra aisément que le système de manutention 1 peut également être utilisé pour la dépose des anciens poteaux et poutres, après que les nouveaux auront été posés.

On déposera en premier l'ancienne poutre, en plaçant le palonnier 60 sous cette dernière et en la saisissant par les moyens de préhension 61. La poutre sera séparée des poteaux par découpe au niveau des têtes de poteaux, par exemple à l'aide de cisailles hydrauliques montées sur des nacelles rail route circulant sur les voies latérales.

Le bec 62 est alors déplacé vers le haut le long du mât 50, de façon à dégager la poutre de ses appuis, puis le véhicule de manutention 8 est décalé pour éloigner la poutre des poteaux. Le mât 50, et donc le palonnier 60, est ensuite amené à pivoter autour de l'axe vertical de l'articulation 51 pour que la poutre soit parallèle à la direction longitudinale du wagon de manutention 8. La poutre est alors abaissée tout en restant horizontale, en passant entre les deux caténaires, de la même manière que la nouvelle poutre a été élevée au-dessus des caténaires. Le système de manutention 1 est ensuite replacé dans sa position d'attente, la poutre se trouvant alors sur l'axe longitudinal médian du wagon de manutention 1, où elle peut être saisie par le dispositif de manutention 92 et ramené à un wagon de stockage 7.

On souligne ici que l'on pourrait prévoir que le wagon de manutention 8 soit également équipé de tréteaux, tout comme le wagon porte-nacelle 10, sur lesquels la poutre pourra reposer, permettant à des opérateurs se tenant sur les wagons de manutention 8 et porte-nacelle 10 de découper la poutre en tronçon. Le dispositif de manutention 92 pourra ensuite venir récupérer les tronçons un à un pour les emmener vers les wagons de stockage 9.

On souligne également que, bien qu'il ait été décrit en liaison avec la pose et la dépose de poteaux et poutres pour support de caténaires, donc dans le domaine ferroviaire, le système de manutention 1 peut être utilisé de manière plus générale pour manutentionner dans l'espace tout élément de construction longitudinal, et ce d'une manière rapide, aisée et sûre.

Il est bien entendu que le mode de réalisation préféré qui vient d'être décrit a été donné à titre indicatif et non limitatif et que des modifications peuvent être apportées sans que l'on s'écarte pour autant du cadre de la présente invention, pourvu que ces modifications soient couvertes par les revendications ci-jointes.

## Revendications

1. Système de manutention (1) d'élément de construction longitudinal, tel qu'une poutre (P2, P3) ou un poteau (P1), comprenant une base (2) destinée à être montée sur un véhicule (7, 8), des moyens de manutention (6) pour manutentionner un élément de construction longitudinal, et des moyens de déplacement (3, 4, 5) pour déplacer dans l'espace les moyens de manutention (6), les moyens de déplacement (3, 4, 5) étant d'une part reliés à la base (2) et d'autre part reliés aux moyens de manutention (6), le système de manutention (1) étant **caractérisé par le fait que** les moyens de déplacement (3, 4, 5) comprennent :
- un ensemble bras télescopique (4) ;
- des moyens de montage (3) reliant à la base (2) une première extrémité (400) de l'ensemble bras télescopique (4) d'une manière permettant de faire pivoter l'ensemble bras télescopique (4) vers le haut ou vers le bas tout en faisant pivoter l'ensemble bras télescopique (4) autour d'un axe vertical, de sorte que l'ensemble bras télescopique (4) est orientable, les moyens de montage (3) étant montés sur la base (2) de façon à être aptes à coulisser le long de la base (2) suivant une direction dite transversale, laquelle direction transversale est, une fois la base (2) montée sur le véhicule (7, 8), perpendiculaire à la direction de déplacement du véhicule (7, 8) ; et
- des moyens de commande à distance de l'orientation et de l'allongement/rétractation de l'ensemble bras télescopique (4),
et **par le fait que** les moyens de manutention (6) comprennent un palonnier (60) muni de moyens de préhension (61) aptes à saisir un élément de construction longitudinal et à le relâcher, le palonnier (60) étant relié à la seconde extrémité (410) de l'ensemble bras télescopique (4) par l'intermédiaire d'un dispositif de liaison (5) autorisant un pivotement du palonnier (60) autour d'un axe vertical et autour d'un axe horizontal orthogonal à la direction longitudinale du palonnier (60).

2. Système de manutention (1) selon la revendication 1, **caractérisé par le fait que** le dispositif de liaison (5) comprend un mât vertical (50) relié à l'ensemble bras télescopique (4) de façon à pouvoir tourner autour d'un axe vertical, et le long duquel mât vertical (50) le palonnier (60) est déplaçable en translation.

3. Système de manutention (1) selon la revendication 2, **caractérisé par le fait que** le dispositif de liaison (5) comprend en outre un bec (52) comportant une première partie (520) qui est reliée au mât vertical (50) de façon à être déplaçable en translation le long de ce dernier, et une seconde partie (521) qui s'étend à partir de la première partie (520) dans une direction d'extension qui est perpendiculaire à cette dernière, le palonnier (60) étant relié à la seconde partie (521) du bec (52) par une liaison pivot (53) dont l'axe de pivotement est parallèle à ladite direction d'extension.

4. Système de manutention (1) selon l'une quelconque des revendications 1 à 3, **caractérisé par le fait que** les moyens de préhension (61) sont disposés de façon à s'étendre au moins en partie au-dessus du palonnier (60), de telle sorte que l'élément de construction longitudinal qu'il s'agit de manutentionner peut être saisi par le dessous et que le palonnier (60) reste au-dessous dudit élément de construction longitudinal pendant la manutention de ce dernier.

5. Système de manutention (1) selon la revendication 4, **caractérisé par le fait que** le palonnier (60) comprend au moins une platine de support (63) sur laquelle un élément de construction longitudinal est apte à être posé, de préférence deux platines de support (63) espacées l'une de l'autre dans la direction longitudinale du palonnier (60).

6. Système de manutention (1) selon l'une quelconque des revendications 1 à 5, **caractérisé par le fait que** les moyens de préhension (61) comprennent une pince (62), de préférence deux pinces (62) espacées l'une de l'autre dans la direction longitudinale du palonnier (60), le cas échéant chacune des deux pinces (62) se situant au voisinage de l'une respective des deux platines de support (63).

7. Système de manutention (1) selon l'une quelconque des revendications 1 à 6, **caractérisé par le fait que** la base (2) comprend au moins un rail (20) destiné à être fixé sur un véhicule (7, 8) transversalement à la direction de déplacement du véhicule (7, 8), de préférence deux rails parallèles (20).

8. Système de manutention (1) selon l'une quelconque des revendications 1 à 7, **caractérisé par le fait que** les moyens de montage (3) comprennent une tourelle (33) ayant une première partie (330) fixe en rotation et montée à translation sur la base (2), et une seconde partie (331) mobile en rotation et à laquelle l'ensemble bras télescopique (4) est relié par une liaison pivot (34) dont l'axe de pivotement est horizontal.

9. Système de manutention (1) selon l'une quelconque des revendications 1 à 8, **caractérisé par le fait que** les moyens de montage (3) comprennent un berceau correcteur de dévers (32), disposé entre la base (2) et l'ensemble bras télescopique (4), le cas échéant disposé entre la base (2) et la tourelle (33).

10. Système de manutention (1) selon l'une quelconque des revendications 1 à 9, **caractérisé par le fait que** les moyens de montage (3) comprennent un chariot (30) monté à translation sur la base (2), le cas échéant coopérant avec le ou les rails (20) que comprennent la base (2), chariot (30) sur lequel est monté, le cas échéant, la tourelle (33) ou le berceau correcteur de dévers (32), lorsque ce dernier est présent.

11. Véhicule (7, 8), de préférence ferroviaire, de manutention d'élément de construction longitudinal, équipé d'un système (1) de manutention d'élément de construction, **caractérisé par le fait que** le système de manutention (1) est tel que défini à l'une quelconque des revendications 1 à 10, la base étant fixée sur le véhicule (7, 8).

12. Véhicule de manutention (7, 8) selon la revendication 11, **caractérisé par le fait qu'**il comprend une plateforme longitudinale (80) sur laquelle la base (2) du système de manutention (1) est fixée, dans la partie médiane de la plateforme (80) dans ladite direction longitudinale.

13. Véhicule de manutention (7, 8) selon l'une quelconque des revendications 11 et 12, **caractérisé par le fait que** le véhicule (7, 8) comprend un wagon plat, dit wagon de manutention (8), équipé d'un rail (81) sur chaque côté longitudinal, le wagon de manutention (8) étant destiné à être accouplé, par un pont inter-wagon (82), à un autre wagon plat, dit de stockage (9), également équipé d'un rail (91) sur chaque côté longitudinal.

14. Véhicule de manutention (7, 8) selon la revendication 13, **caractérisé par le fait qu'**il comprend ledit wagon de stockage (9) et, de préférence, au moins un autre wagon de stockage (9) équipé d'un rail (91) sur chaque côté longitudinal, les wagons de stockage (9) étant accouplés les uns à la suite des autres par un pont inter-wagon (83) entre chaque wagon de stockage adjacent (9), le ou chaque wagon de stockage (9) étant équipé d'au moins un dispositif de rangement et d'arrimage d'éléments de construction longitudinaux, le véhicule de manutention (7, 8) comprenant en outre un dispositif de manutention (92) monté à translation sur lesdits rails (81, 91) et apte à saisir un élément de construction longitudinal stocké sur un wagon de stockage (9) et à venir le placer dans une position où ledit élément de construction longitudinal peut être saisi par les moyens de préhension (61) du système de manutention (1).

15. Véhicule de manutention (7, 8) selon la revendication 14, équipé d'un système de manutention (1) tel que défini à la revendication 4 ou à l'une quelconque des revendications 5 à 10 lorsqu'elles sont prises en dépendance de la revendication 4, **caractérisé par le fait que** le dispositif de manutention (92) comprend un portique (920) monté à translation le long des rails (81, 91) des wagons de stockage (9) et du wagon de manutention (8), et des moyens de manutention (924) portés par le portique (920) et aptes à saisir et relâcher de manière sélective un élément de construction longitudinal et à le déplacer au moins verticalement, de préférence à la fois horizontalement et verticalement.

16. Véhicule de manutention (7, 8) selon la revendication 15, **caractérisé par le fait que** les moyens de manutention (924) du dispositif de manutention (92) comprennent deux glissières (925) solidaires du portique (920) et transversales à la direction longitudinale du véhicule (7, 8), deux chariots (926) chacun montés à translation sur l'une respective des glissières (926), des moyens de préhension (928) reliés aux chariots (926) par des moyens aptes à faire monter et descendre les moyens de préhension (928), tels que des câbles (927), les moyens de préhension (928) étant aptes à, de manière sélective, saisir par le dessus un élément de construction longitudinal et le relâcher.

17. Véhicule de manutention (7, 8) selon la revendication 16, **caractérisé par le fait que** les moyens de préhension (928) du dispositif de manutention (92) comprennent, pour chaque chariot (926), une pince, de préférence les deux glissières (925), et donc les chariots (926) et lesdites pinces, étant espacées l'une de l'autre dans la direction longitudinale du portique (920).

## Patentansprüche

1. Fördersystem (1) eines länglichen Bauelements wie ein Träger (P2, P3) oder eine Stütze (P1), umfassend eine Basis (2), die zur Anbringung auf einem Fahrzeug (7, 8) bestimmt ist, Fördermittel (6) zum Fördern eines länglichen Bauelements und Verlagerungsmittel (3, 4, 5) zur räumlichen Verlagerung der Fördermittel (6), wobei die Verlagerungsmittel (3, 4, 5) zum einen mit der Basis (2) verbunden sind und zum anderen mit den Fördermitteln (6) verbunden sind, wobei das Fördersystem (1) **dadurch gekennzeichnet ist, dass** die Verlagerungsmittel (3, 4, 5) umfassen:
- eine Teleskoparmeinheit (4) ;
- Montagemittel (3), die ein erstes Ende (400) der Teleskoparmeinheit (4) derart mit der Basis (2) verbinden, dass das Schwenken der Teleskoparmeinheit (4) nach oben oder nach unten durch Schwenken der Teleskoparmeinheit (4) um eine vertikale Achse gestattet ist, so dass die Teleskoparmeinheit (4) ausrichtbar ist, wobei die Montagemittel (3) derart auf der Basis (2) angebracht sind, dass sie imstande sind, entlang der Basis (2) gemäß einer transversalen Richtung zu gleiten, wobei die transversale Richtung nach Anbringung der Basis (2) auf dem Fahrzeug (7, 8) senkrecht zur Fahrtrichtung des Fahrzeugs (7, 8) ist; und
- Fernsteuerungsmittel des Ausrichtens und des Streckens/Einziehens der Teleskoparmeinheit (4),
und dadurch, dass die Fördermittel (6) einen Hubbalken (60) umfassen, der mit Greifmitteln (61) ausgestattet ist, die imstande sind, ein längliches Bauelement zu ergreifen und es loszulassen, wobei der Hubbalken (60) am zweiten Ende (410) der Teleskoparmeinheit (4) über eine Verbindungsvorrichtung (5) verbunden ist, die ein Schwenken des Hubbalkens (60) um eine vertikale Achse und um eine horizontale Achse orthogonal zur Längsrichtung des Hubbalkens (60) gestattet.

2. Fördersystem (1) nach Anspruch 1, **dadurch gekennzeichnet, dass** die Verbindungsvorrichtung (5) einen vertikalen Mast (50) umfasst, der mit der Teleskoparmeinheit (4) derart verbunden ist, dass er um eine vertikale Achse drehen kann, und der Hubbalken (60) entlang des vertikalen Masts (50) translatorisch verlagerbar ist.

3. Fördersystem (1) nach Anspruch 2, **dadurch gekennzeichnet, dass** die Verbindungsvorrichtung (5) ferner einen Schnabel (52) umfasst, der einen ersten Abschnitt (520) aufweist, der mit dem vertikalen Mast (50) derart verbunden ist, dass er entlang desselben translatorisch verlagerbar ist, und einen zweiten Abschnitt (521), der sich ab dem ersten Abschnitt (520) in einer Extensionsrichtung erstreckt, die zu diesem senkrecht ist, wobei der Hubbalken (60) am zweiten Abschnitt (521) des Schnabels (52) durch eine Schwenkverbindung (53) verbunden ist, deren Schwenkachse parallel zu der Extensionsrichtung ist.

4. Fördersystem (1) nach einem der Ansprüche 1 bis 3, **dadurch gekennzeichnet, dass** die Greifmittel (61) derart angeordnet sind, dass sie sich mindestens teilweise oberhalb des Hubbalkens (60) erstrecken, so dass das längliche Bauelement, das gefördert werden soll, von unten ergreifbar ist und dass der Hubbalken (60) während des Förderns des länglichen Bauelements unterhalb desselben bleibt.

5. Fördersystem (1) nach Anspruch 4, **dadurch gekennzeichnet, dass** der Hubbalken (60) mindestens eine Halterung (63) umfasst, auf welcher ein längliches Bauelement ablegbar ist, vorzugsweise zwei Halterungen (63), die in der Längsrichtung des Hubbalkens (60) voneinander beabstandet sind.

6. Fördersystem (1) nach einem der Ansprüche 1 bis 5, **dadurch gekennzeichnet, dass** die Greifmittel (61) eine Zange (62), vorzugsweise zwei Zangen (62) umfassen, die in der Längsrichtung des Hubbalkens (60) voneinander beabstandet sind, wobei sich gegebenenfalls jede der zwei Zangen (62) in der Nähe einer der jeweiligen zwei Halterungen (63) befindet.

7. Fördersystem (1) nach einem der Ansprüche 1 bis 6, **dadurch gekennzeichnet, dass** die Basis (2) mindestens eine Schiene (20), die zur Befestigung auf einem Fahrzeug (7, 8) transversal zur Fahrtrichtung des Fahrzeugs (7, 8) bestimmt ist, vorzugsweise zwei parallele Schienen (20) umfasst.

8. Fördersystem (1) nach einem der Ansprüche 1 bis 7, **dadurch gekennzeichnet, dass** die Montagemittel (3) einen Revolverkopf (33) umfassen, mit einem ersten Abschnitt (330), der rotatorisch befestigt und translatorisch auf der Basis (2) angebracht ist, und einem zweiten Abschnitt (331), der rotatorisch beweglich ist und an dem die Teleskoparmeinheit (4) durch eine Schwenkverbindung (34) verbunden ist, deren Schwenkachse horizontal ist.

9. Fördersystem (1) nach einem der Ansprüche 1 bis 8, **dadurch gekennzeichnet, dass** die Montagemittel (3) eine Wiege für den Neigungsausgleich (32) umfassen, der zwischen der Basis (2) und der Teleskoparmeinheit (4) angeordnet ist, gegebenenfalls zwischen der Basis (2) und dem Revolverkopf (33) angeordnet ist.

10. Fördersystem (1) nach einem der Ansprüche 1 bis 9, **dadurch gekennzeichnet, dass** die Montagemittel (3) einen Schlitten (30) umfassen, der translatorisch auf der Basis (2) angebracht ist, der gegebenenfalls mit der oder den Schienen (20) zusammenwirkt, die die Basis (2) umfasst, wobei auf dem Schlitten (30) gegebenenfalls der Revolverkopf (33) oder die Wiege für den Neigungsausgleich (32) angebracht ist, sofern Letzterer vorhanden ist.

11. Förderfahrzeug (7, 8), vorzugsweise schienengebundenes, eines länglichen Bauelements, ausgerüstet mit einem Fördersystem (1) eines Bauelements, **dadurch gekennzeichnet, dass** das Fördersystem (1) nach einem der Ansprüche 1 bis 10 ist, wobei die Basis auf dem Fahrzeug (7, 8) befestigt ist.

12. Förderfahrzeug (7, 8) nach Anspruch 11, **dadurch gekennzeichnet, dass** es eine längliche Plattform (80) umfasst, auf der die Basis (2) des Fördersystems (1) im in der Längsrichtung mittleren Abschnitt der Plattform (80) befestigt ist.

13. Förderfahrzeug (7, 8) nach einem der Ansprüche 11 und 12, **dadurch gekennzeichnet, dass** das Fahrzeug (7, 8) einen flachen Waggon, bezeichnet als Förderwaggon (8), umfasst, der mit einer Schiene (81) auf jeder langen Seite ausgestattet ist, wobei der Förderwaggon (8) zur Kopplung mittels einer Zwischenwagenbrücke (82) an einen anderen flachen, als Lagerwaggon (9) bezeichneten Waggon (9) bestimmt ist, der ebenfalls mit einer Schiene (91) auf jeder langen Seite ausgestattet ist.

14. Förderfahrzeug (7, 8) nach Anspruch 13, **dadurch gekennzeichnet, dass** es den Lagerwaggon (9) und vorzugsweise mindestens einen anderen Lagerwaggon (9) umfasst, der mit einer Schiene (91) auf jeder langen Seite ausgestattet ist, wobei die Lagerwaggons (9) mittels einer Zwischenwagenbrücke (83) zwischen jedem benachbarten Lagerwaggon (9) hintereinander gekoppelt sind, wobei der oder jeder Lagerwaggon (9) mit mindestens einer Verstau- und Verzurrvorrichtung länglicher Bauelemente ausgestattet ist, wobei das Förderfahrzeug (7, 8) ferner eine Fördervorrichtung (92) umfasst, die auf den Schienen (81, 91) translatorisch angebracht ist und imstande, ein längliches Bauelement, das auf einem Lagerwaggon (9) lagert, zu ergreifen und es in eine Position zu platzieren, in der das längliche Bauelement von den Greifmitteln (61) des Fördersystems (1) ergriffen werden kann.

15. Förderfahrzeug (7, 8) nach Anspruch 14, ausgestattet mit einem Fördersystem (1) nach Anspruch 4 oder nach einem der Ansprüche 5 bis 10, wenn sie in Abhängigkeit von Anspruch 4 herangezogen werden, **dadurch gekennzeichnet, dass** die Fördervorrichtung (92) ein Gestell (920) umfasst, das entlang der Schienen (81, 91) der Lagerwaggons (9) und des Förderwaggons (8) translatorisch angebracht ist, und Fördermittel (924), die von dem Gestell (920) getragen werden und imstande sind, ein längliches Bauelement selektiv zu ergreifen und loszulassen und es mindestens vertikal, vorzugsweise zugleich horizontal und vertikal, zu verlagern.

16. Förderfahrzeug (7, 8) nach Anspruch 15, **dadurch gekennzeichnet, dass** die Fördermittel (924) der Fördervorrichtung (92) zwei Führungsschienen (925) umfassen, die mit dem Gestell (920) fest verbunden und zur Längsrichtung des Fahrzeugs (7, 8) transversal sind, zwei Schlitten (926), die jeder auf einer der jeweiligen Gleitschienen (926) translatorisch angebracht sind, Greifmittel (928), die mit den Schlitten (926) durch Mittel verbunden sind, die imstande sind, die Greifmittel (928) zu heben und zu senken, wie Kabel (927), wobei die Greifmittel (928) imstande sind, ein längliches Bauelement selektiv von oben zu ergreifen und es loszulassen.

17. Förderfahrzeug (7, 8) nach Anspruch 16, **dadurch gekennzeichnet, dass** die Greifmittel (928) der Fördervorrichtung (92) für jeden Schlitten (926) eine Zange umfassen, wobei vorzugsweise die zwei Führungsschienen (925) und demzufolge die Schlitten (926) und die Zangen in der Längsrichtung des Gestells (920) voneinander beabstandet sind.

## Claims

1. A handling system (1) for handling a longitudinal construction element, such as a beam (P2, P3) or a post (P1), comprising a base (2) intended to be mounted on a vehicle (7, 8), handling means (6) for handling a longitudinal construction element, and movement means (3, 4, 5) for moving the handling means (6) in space, the movement means (3, 4, 5) on the one hand being coupled to the base (2) and on the other hand being coupled to the handling means (6), the handling system (1) being **characterised in that** the movement means (3, 4, 5) comprise:
- a telescoping arm assembly (4);
- mounting means (3) coupling, to the base (2), a first end (400) of the telescoping arm assembly (4) in a manner making it possible to pivot the telescoping arm assembly (4) upward or downward while pivoting the telescoping arm assembly (4) about a vertical axis, such that the telescoping arm assembly (4) is able to be oriented, the mounting means (3) being mounted on the base (2) so as to be able to slide along the base (2) along a so-called transverse direction, wherein the transverse direction is, once the base (2) is mounted on the vehicle (7, 8), perpendicular to the movement direction of the vehicle (7, 8); and
- remote control means for the orientation and the elongation/retraction of the telescoping arm assembly (4),
and **in that** the handling means (6) comprise a spreader beam (60) provided with gripping means (61) able to grasp a longitudinal construction element and to release it, the spreader beam (60) being coupled to the second end (410) of the telescoping arm assembly (4) by means of a connecting device (5) allowing pivoting of the spreader beam (60) about a vertical axis and about a horizontal axis orthogonal to the longitudinal direction of the spreader (60) .

2. The handling system (1) according to claim 1, **characterised in that** the connecting device (5) comprises a vertical mast (50) coupled to the telescoping arm assembly (4) so as to be able to rotate about a vertical axis, and along which vertical mast (50) the spreader (60) is movable in translation.

3. The handling system (1) according to claim 2, **characterised in that** the connecting device (5) further comprises a nose (52) including a first part (520) that is coupled to the vertical mast (50) so as to be translatable along the latter, and a second part (521) that extends from the first part (520) in an extension direction that is perpendicular to the latter, the spreader (60) being coupled to the second part (521) of the nose (52) by a pivot link (53), the pivot axis of which is parallel to said extension direction.

4. The handling system (1) according to any one of claims 1 to 3, **characterised in that** the gripping means (61) are positioned so as to extend at least partially above the spreader (60), such that the longitudinal construction element to be handled can be grasped from below and the spreader (60) remains below said longitudinal construction element during the handling thereof.

5. The handling system (1) according to claim 4, **characterised in that** the spreader (60) comprises at least one support plate (63) on which a longitudinal construction element can be placed, preferably two support plates (63) spaced apart from one another in the longitudinal direction of the spreader (60).

6. The handling system (1) according to any one of claims 1 to 5, **characterised in that** the gripping means (61) comprise a clamp (62), preferably two clamps (62) spaced apart from one another in the longitudinal direction of the spreader (60), if applicable each of the two clamps (62) being located near a respective one of the two support plates (63).

7. The handling system (1) according to any one of claims 1 to 6, **characterised in that** the base (2) comprises at least one rail (20) intended to be secured on a vehicle (7, 8) transversely to the direction of movement of the vehicle (7, 8), preferably two parallel rails (20).

8. The handling system (1) according to any one of claims 1 to 7, **characterised in that** the mounting means (3) comprise a turret (33) having a first part (330) fixed in rotation and mounted in translation on the base (2), and a second part (331) movable in rotation and to which the telescoping arm assembly (4) is coupled by a pivot link (34), the pivot axis of which is horizontal.

9. The handling system (1) according to any one of claims 1 to 8, **characterised in that** the mounting means (3) comprise a cant control cradle (32), positioned between the base (2) and the telescoping arm assembly (4), if applicable positioned between the base (2) and the turret (33) .

10. The handling system (1) according to any one of claims 1 to 9, **characterised in that** the mounting means (3) comprise a carriage (30) mounted translatably on the base (2), if applicable cooperating with the rail(s) (20) comprised by the base (2), on which carriage (30) is mounted, if applicable, the turret (33) or the cant control cradle (32), when the latter is present.

11. A vehicle (7, 8), preferably a railway vehicle, for handling a longitudinal construction element, equipped with a handling system (1) for handling a construction element, **characterised in that** the handling system (1) is as defined according to any one of claims 1 to 10, the base being secured on the vehicle (7, 8).

12. The handling vehicle (7, 8) according to claim 11, **characterised in that** it comprises a longitudinal platform (80) on which the base (2) of the handling system (1) is secured, in the median part of the platform (80) in said longitudinal direction.

13. The handling vehicle (7, 8) according to any one of claims 11 and 12, **characterised in that** the vehicle (7, 8) comprises a flat wagon, called handling wagon (8), equipped with a rail (81) on each longitudinal side, the handling wagon (8) being intended to be coupled, by an inter-wagon bridge (82), to another flat wagon, called storage wagon (9), also equipped with a rail (91) on each longitudinal side.

14. The handling vehicle (7, 8) according to claim 13, **characterised in that** it comprises said storage wagon (9) and, preferably, at least one other storage wagon (9) equipped with a rail (91) on each longitudinal side, the storage wagons (9) being coupled one after the other by an inter-wagon bridge (83) between each adjacent storage wagon (9), the or each storage wagon (9) being equipped with at least one device for storing and securing longitudinal construction elements, the handling vehicle (7, 8) further comprising a handling device (92) mounted in translation on said rails (81, 91) and able to grasp a longitudinal construction element stored on a storage wagon (9) and to place it in a position where said longitudinal construction element can be grasped by the gripping means (61) of the handling system (1).

15. The handling vehicle (7, 8) according to claim 14, equipped with a handling system (1) as defined in claim 4 or any one of claims 5 to 10 when they depend on claim 4, **characterised in that** the handling device (92) comprises a gantry (920) mounted in translation along the rails (81, 91) of the storage wagons (9) and the handling wagon (8), and handling means (924) carried by the gantry (920) and able to selectively grasp and release a longitudinal construction element and to move it at least vertically, preferably both horizontally and vertically.

16. The handling vehicle (7, 8) according to claim 15, **characterised in that** the handling means (924) of the handling device (92) comprise two guideways (925) secured to the gantry (920) and transverse to the longitudinal direction of the vehicle (7, 8), two carriages (926) each mounted in translation on a respective one of the guideways (926), gripping means (928) coupled to the carriages (926) by means able to raise and lower the gripping means (928), such as cables (927), the gripping means (928) being able, selectively, to grasp a longitudinal construction element from above and to release it.

17. The handling vehicle (7, 8) according to claim 16, **characterised in that** the gripping means (928) of the handling device (92) comprise, for each carriage (926), a clamp, preferably the two guideways (925), and therefore the carriages (926) and said clamps, being spaced apart from one another in the longitudinal direction of the gantry (920).
